# EUROPEAN PATENT APPLICATION

(11) **EP 1 783 966 A2**
(43) Date of publication of application: **09.05.2007**
(21) Application number: 06123524.8
(22) Date of filing: 06.11.2006
(51) Int. Cl.: H04L 12/56

(54) **Apparatus and method for supporting multiple links by grouping multiple hops**

(30) Priority: 04.11.2005 KR 20050105511; 02.06.2006 KR 20060049692
(71) Applicant: Samsung Electronics Co., Ltd., Suwon-si, Gyeonggi-Do (KR)
(72) Inventor: Lee, Mi-Hyun, Gwanak-gu, Seoul (KR); Joo, Pan-Yuh, Seocho-gu, Seoul (KR); Son, Jung-Je, Nr. 306-901, Sinhan APT., Seongnam-si, Gyeonggi-do (KR); Cho, Jae-Weon, Nr. 944-1110, Lotte APT., Suwon-si, Gyeonggi-do (KR); Lim, Hyoung-Kyu, Youngdeungpo-gu, Seoul (KR); Son, Yeong-Moon, Manan-gu, Anyang-si, Gyeonggi-do (KR); Lee, Sung-Jin, Songpa-gu, Seoul (KR); Kang, Hyun-Jeong, Gangnam-gu, Seoul (KR); Hong, Song-Nam, Gangdong-gu, Seoul (KR); Kim, Young-Ho, Nr. 542-802, Ssangyong APT., Suwon-si, Gyeonggi-do (KR)
(74) Representative: Grünecker, Kinkeldey, Stockmair & Schwanhäusser Anwaltssozietät

(57) **Abstract**

An apparatus and method for configuring a subframe to support multiple links by grouping multiple hops in a multi-hop relay cellular network are provided. A BS collects information about RSs forming relay links to a destination and groups the relay links according to the collected RS information. The BS allocates different resources to the relay link groups and sends information about the allocated resources to the RSs.

## Description

### PRIORITY

This application claims priority under 35 U.S.C. § 119 to an application filed in the Korean Intellectual Property Office on November 4, 2005 and assigned Serial No. 2005-105511 and an application filed in the Korean Intellectual Property Office on June 2, 2006 and assigned Serial No. 2006-49692, the contents of which are incorporated herein by reference.

### BACKGROUND OF THE INVENTION

### 1. Field of the Invention

The present invention relates generally to a multi-hop relay cellular network, and in particular, to an apparatus and method for configuring subframes by grouping multiple hops in a multi-hop relay cellular network.

### 2. Description of the Related Art

The most critical requirement for deployment of a 4^{th} Generation (4G) mobile communication system recently being researched is to build a self-configurable wireless network. The self-configurable wireless network is a wireless network that is configured in an autonomous or distributed manner without control of a central system to provide mobile communication services. The 4G mobile communication system installs cells of very small radiuses for the purpose of enabling high-speed communications and accommodating a larger number of calls. As such, the use of conventional centralized wireless network design is not feasible. Rather, the wireless network should be built to be under distributed control and to actively cope with an environmental change like the addition of a new Base Station (BS). That's why the 4G mobile communication system requires a self-configurable wireless network configuration.

For real deployment of the self-configurable wireless network, techniques used for an ad hoc network should be introduced to the mobile communication system. A major example of these techniques is a multi-hop relay cellular network built by applying a multi-hop relay scheme used for the ad hoc network to a cellular network with fixed BSs.

In general, since a BS and a Mobile Station (MS) communicate with each other via a direct link in the cellular network, a highly reliable radio link can be established easily between them.

However, due to the fixedness of the BSs, the configuration of the wireless network is not flexible, making it difficult to provide an efficient service in a radio environment experiencing a fluctuating traffic distribution and a great change in the number of required calls.

These drawbacks can be overcome by a relay scheme for delivering data over multiple hops using a plurality of neighbor MSs or neighbor Relay Stations (RSs). The multi-hop relay scheme facilitates fast network reconfiguration adaptive to an environmental change and renders the overall wireless network operation efficient. Also, a radio channel in a better channel status can be provided to an MS by installing an RS between the BS and the MS and thus establishing a multi-hop relay path via the RS. What is better, since high-speed data channels can be provided to MSs in a shadowing area or an area where communications with the BS is unavailable, cell coverage is expanded.

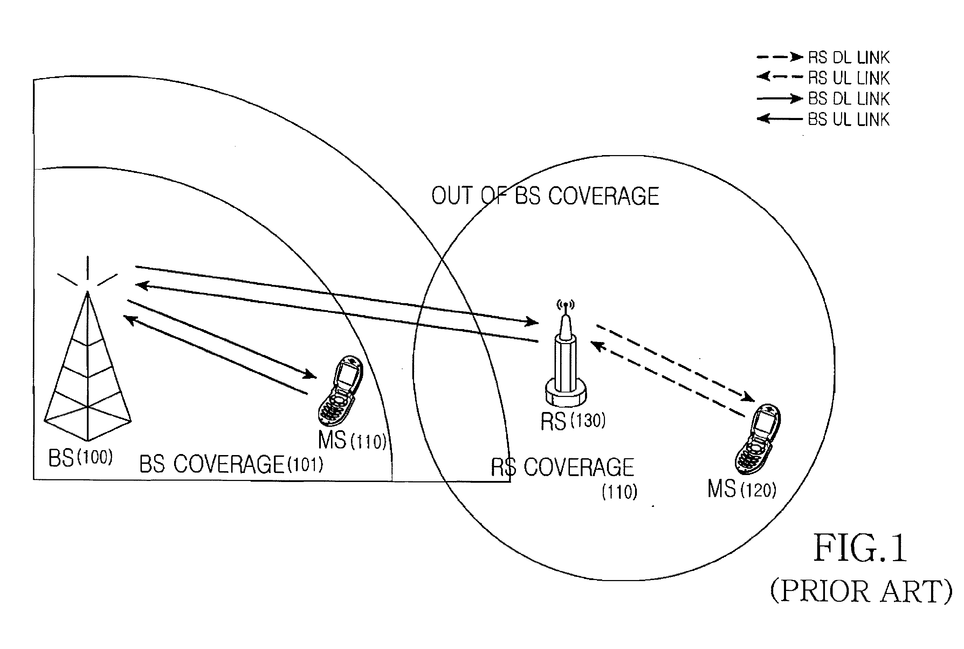

FIG. 1 illustrates the configuration of a typical multi-hop relay cellular network.

Referring to FIG. 1, an MS 110 within the service area 101 of a BS 100 is connected to the BS 100 via a direct link. On the other hand, an MS 120, which is located outside the service area 101 of the BS 100 and thus in a poor channel state, communicates with the BS 100 via a relay link of an RS 130.

The BS 100 provides better-quality radio channels to the MSs 110 and 120 via the RS 130 when they communicate with the BS 100 but in a poor channel state as they are located at a boundary of the service area 101.

Thus, the BS 100 can provide a high-speed data channel to the cell boundary area using a multi-hop relay scheme and thus expand its cell coverage. There are a BS-MS link, a BS-RS link and an RS-MS link in the cellular network.

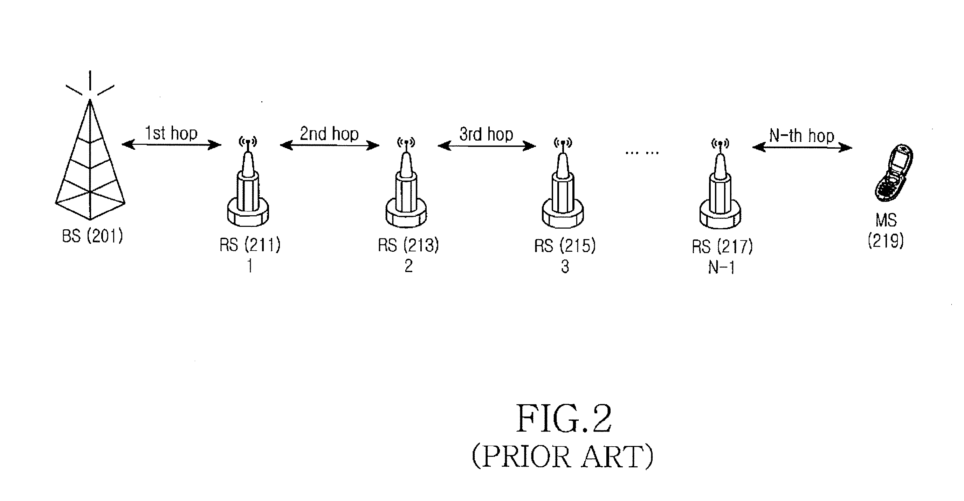

The multi-hop relay scheme illustrated in FIG. 1 enables establishment of multi-hop relay links by use of a plurality of RSs as illustrated in FIG. 2.

FIG. 2 illustrates the configuration of a typical multi-hop cellular network.

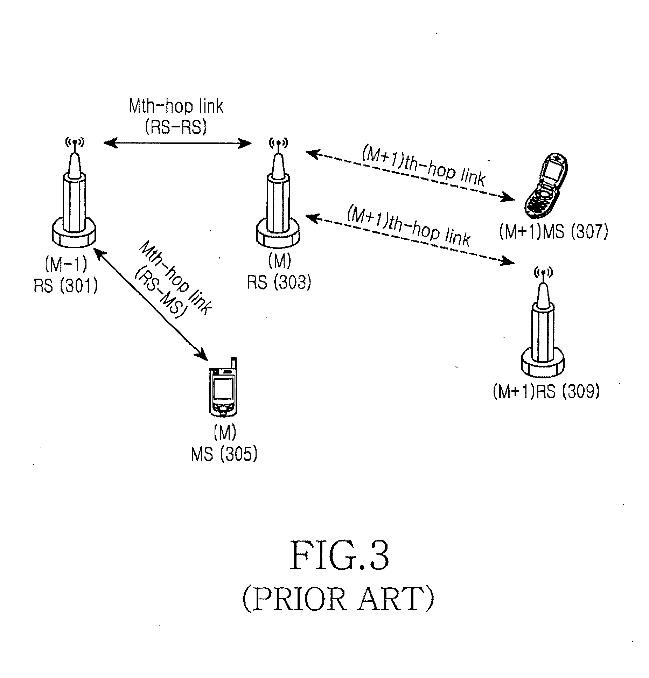

Referring to FIG. 2, a BS 201 establishes a communication link with an MS 219 by use of a plurality of RSs 211, 213, 215 and 217 in order to provide a service to the MS 219. The RSs 211, 213, 215 and 217 operate in the manner illustrated in FIG. 3.

FIG. 3 illustrates multiple one-hop links in the typical multi-hop cellular network.

Referring to FIG. 3, a two-hop network is comprised of an (M-1)-hop RS 301, an M-hop RS 303, an M-hop MS 305, an (M+1)-hop MS 307, and an (M+1)-hop RS 309.

The (M-1)-hop RS 301 establishes a communication link with the M-hop RS 303 or the M-hop MS 305. The M-hop RS 303 establishes a communication link with the (M+1)-hop MS 307 or the (M+1)-hop RS 309.

In the above manner, the communication link between the BS 201 and the MS 219 is extended to multiple hops.

To enable the MS with mobility to communicate with the multi-hop RSs as well as with the BS, resources (i.e. channels) available in the air interface should be dynamically distributed to each link across multiple hops. If the RSs are fixed, they can receive energy continuously. Yet, if the RSs support mobility, they use limited-resource batteries as their energy sources. For example, when laptop computers or Personal Digital Assistants (PDAs) move, supplying stable energy to them is difficult. In this context, efficient energy use or saving mechanisms are needed.

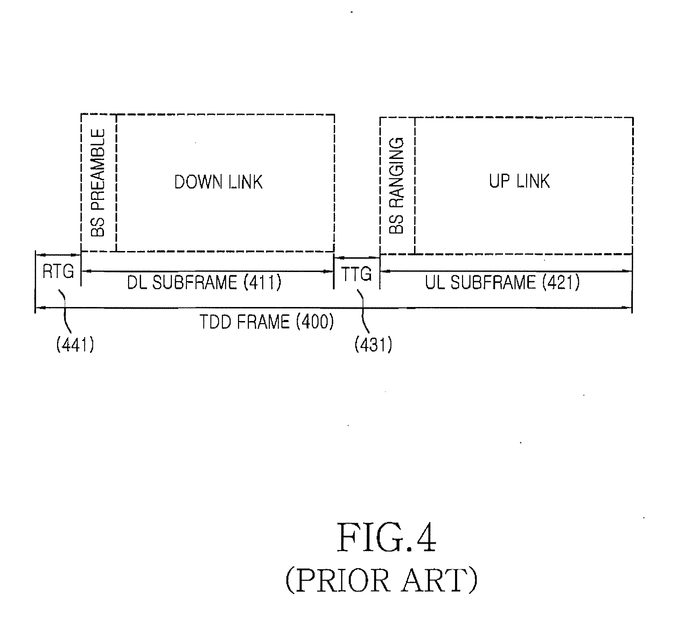

A frame structure configured to support the typical cellular network is illustrated in FIG. 4.

FIG. 4 illustrates the structure of a typical Time Division Duplexing (TDD) frame. The horizontal axis represents time and the vertical axis represents frequency.

Referring to FIG. 4, one TDD frame 400 is divided into a downlink subframe 411 and an uplink subframe 421. The downlink subframe 411 includes a preamble signal for synchronization acquisition at MSs, control information with the position information of data allocated to downlink bursts, and the downlink bursts carrying the data to the MSs.

The uplink subframe 421 includes a BS ranging signal and uplink bursts carrying uplink data from a plurality of MSs.

A Transmit/Receive Transition Gap (TTG) 431 intervenes between the downlink subframe 411 and the uplink subframe 421 as a guard region to allow for BS transmission-reception mode transition. A Receive/Transmit Transition Gap (RTG) 441 intervenes between the uplink subframe and the downlink subframe to allow for BS reception-transmission mode transition.

To support the multi-hop relay scheme with the thus-configured TDD frame structure, the frame has to be reconfigured such that multiple one-hop links are distinguished by different time slots.

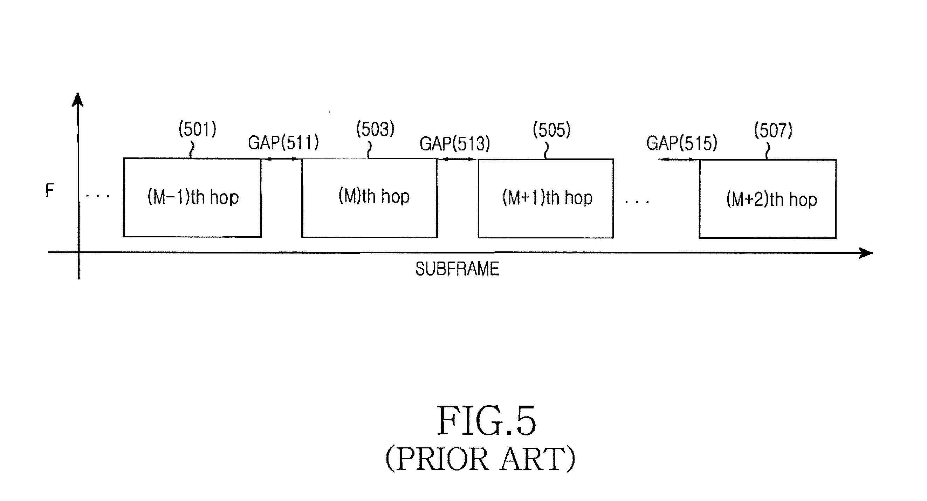

FIG. 5 illustrates a conventional subframe structure for a multi-hop link. The horizontal axis represents time and the vertical axis represents frequency.

Referring to FIG. 5, subframes for multiple one-hop links are defined in different time slots within one subframe. Specifically, different time slots are sequentially allocated to a subframe 501 for an (M-1)^{th} hop link, a subframe 503 for an M^{th} hop link, and a subframe 505 for an (M+1)^{th} hop link in the subframe. An RS transition gap intervenes between each one-hop link subframe pair. For example, the (M-1)^{th} hop link subframe 501 includes a link on which the (M-1)-hop RS 301 communicates with the M-hop RS 303 or the M-hop MS 305. Also, the M^{th}-hop link subframe 503 includes a link on which the M-hop RS 303 communicates with the (M+1)-hop MS 307 or the (M+1)-hop RS 309. The M-hop RS 303 receives a signal from the (M-1)-hop RS 301 in the (M-1)^{th} hop link subframe 501 and sends a signal to the (M+1)-hop RS 307 or the (M+1)-hop MS 309 in the M^{th} hop link subframe 503. That's why a transition gap 511 is required between the (M-1)^{th} hop link subframe 501 and the M^{th} hop link subframe 503. Likewise, a transition gap 513 is provided between M^{th} hop link subframe 503 and (M+1)^{th} hop link subframe 505, and transition gap 515 is provided between (M+1)^{th} hop link subframe 505 and (M+2)^{th} hop link subframe 507.

As described above, when different time slots are sequentially allocated to one-hop links, a transition gap is required between adjacent one-hop link subframes in the multi-hop relay cellular network.

Generally, the TDD frame is short in length, taking into account feedback delay that significantly affects the performance of Transmit Control Protocol (TCP), throughput, Automatic Repeat reQuest/Hybrid Automatic Repeat reQuest (ARQ/HARQ), and closed loop power control. Therefore, the transition gap between adjacent one-hop links within the short frame adds significantly to overhead. Also, the division of one subframe into a plurality of time slots brings about overhead with respect to the granularity of resource allocation to each hop. As the duration of each time slot is decreased, link budget gain achieved by power concentration is reduced.

### SUMMARY OF THE INVENTION

An object of the present invention is to substantially solve at least the above problems and/or disadvantages and to provide at least the advantages below. Accordingly, an object of the present invention is to provide an apparatus and method for reducing transmission overhead in a multi-hop relay cellular network.

Another object of the present invention is to provide a method of configuring a frame by grouping multiple hops to reduce transmission overhead and an apparatus supporting the same in a multi-hop relay cellular network.

The above objects are achieved by providing an apparatus and method for configuring a subframe to support multiple links by grouping multiple hops in a multi-hop relay cellular network.

According to one aspect of the present invention, in a method of supporting multiple links by grouping multiple hops in a BS in a multi-hop relay cellular network, the BS collects information about RSs forming relay links to a destination and groups the relay links according to the collected RS information. The BS allocates different resources to the relay link groups and sends information about the allocated resources to the RSs.

According to another aspect of the present invention, in a method of configuring a subframe in a multi-hop relay cellular network, a subframe for an n^{th}-hop link group is configured in a first period of the subframe, and a subframe for an (n+1)^{th}-hop link group is configured in a second period of the subframe.

According to a further aspect of the present invention, in a method of configuring a subframe in a multi-hop relay cellular network, a subframe for a direct link of a BS is configured in a first period of the subframe. A subframe for an n^{th}-hop link group is configured in a second period of the subframe. A subframe for an (n+1)^{th}-hop link group is configured in a third period of the subframe.

According to still another aspect of the present invention, in a method of configuring a superframe in a multi-hop relay cellular network, a subframe for an n^{th}-hop link group is configured in an i^{th} frame and a subframe for an (n+1)^{th}-hop link group is configured in an (i+1)^{th} frame.

According to yet another aspect of the present invention, in a method of configuring a superframe in a multi-hop relay cellular network, a subframe for a direct link of a BS is configured in an i^{th} frame, a subframe for an n^{th}-hop link group is configured in an (i+1)^{th} frame, and a subframe for an (n+1)^{th}-hop link group is configured in an (i+2)^{th} frame.

According to yet further aspect of the present invention, in a frame configuring apparatus in a multi-hop relay cellular network, a timing controller provides a timing signal for transmission of each subframe according to a frame configuration method. A frame generator generates subframes for the predetermined hop link groups according to the timing signal and constructs a frame with the subframe. A resource scheduler maps the subframes to resources allocated to a burst for the hop link groups.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates the configuration of a typical multi-hop relay cellular network;
FIG. 2 illustrates the configuration of a typical cellular network with multiple hops;
FIG. 3 illustrates multiple one-hop links in the typical multi-hop cellular network;
FIG. 4 illustrates the structure of a typical TDD frame;
FIG. 5 illustrates a conventional subframe structure for a multi-hop link;
FIG. 6 illustrates a subframe structure supporting groups of multiple hops in a multi-hop relay cellular network according to the present invention;
FIG. 7 illustrates signal flows and interference paths in the multi-hop relay cellular network according to the present invention;
FIG. 8 illustrates signal flows and interference paths in the multi-hop relay cellular network according to the present invention;
FIG. 9 illustrates resource allocation to a subframe for a group of multiple hops in a multi-hop relay scheme according to the present invention;
FIG. 10 illustrates a multi-hop link structure in the multi-hop relay cellular network scheme according to the present invention;
FIG. 11 illustrates a subframe structure supporting groups of multiple hops according to the present invention;
FIG. 12 illustrates a subframe structure supporting groups of multiple hops according to the present invention;
FIG. 13 is a block diagram of a BS apparatus for grouping multiple hops according to the present invention;
FIG. 14 is a flowchart illustrating a BS operation for grouping multiple hops in the multi-hop relay cellular network according to the present invention;
FIG. 15 illustrates a subframe structure simultaneously supporting a BS-MS link with grouped hop links and a BS-MS link being a direct link according to the present invention;
FIG. 16 illustrates a superframe structure in which a hop link group is provided on a frame basis according to the present invention; and
FIG. 17 illustrates a superframe structure for communication links that a BS and an RS provide in a two-hop Broadband Wireless Access (BWA) system according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention provides a method of configuring subframes by grouping multiple hops and an apparatus supporting the same in a multi-hop relay cellular network. Specifically, subframes are configured for two groups of multiple hops in the multi-hop relay cellular network.

While the following description is made in the context of a Time Division Duplexing-Orthogonal Frequency Division Multiplexing (TDD-OFDM) wireless communication system by way of example, it is to be appreciated that the present invention is applicable to any other multiple access scheme.

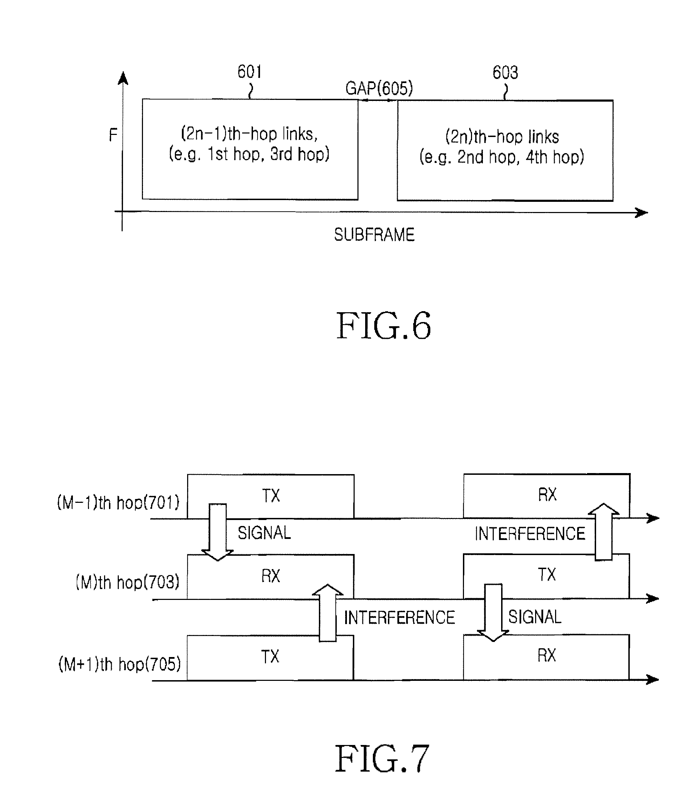

FIG. 6 illustrates a subframe structure supporting multiple links by grouping multiple hops in a multi-hop relay cellular network according to the present invention. The horizontal axis represents time and the vertical axis represents frequency.

Referring to FIG. 6, one subframe is composed of a subframe 601 for a group of odd-numbered hop links and a subframe 603 for a group of even-numbered hop links. Since a communication system (e.g. an RS) at each hop is not affected by signals on links two hops earlier and two hops later, the multiple hops of the cellular network are grouped into an even-numbered hop link group and an odd-numbered hop link group (i.e. a two-hop earlier link group and a two-hop later link group) and subframes are configured for the two groups such that the links of the same hop link group send signals during the same period.

A single transition gap 605 intervenes between the subframe 601 for the odd-numbered hop link group and the subframe 603 for the even-numbered hop link group, thus decreasing transition gap-associated overhead, compared to the existence of a transition gap between every adjacent subframe for adjacent hops. Time slots are not divided for each hop in the subframe of each hop group. The resulting increase in the time lot allocated to one subframe solves the problem of data granularity overhead. Since the subframe 601 or the subframe 603 is configured for each hop, a longer time slot is given to the hop, compared to the subframes illustrated in FIG. 5. Therefore, the communication system at each hop occupies a narrower bandwidth and improves link budget with power concentration that a low-power communication system may achieve.

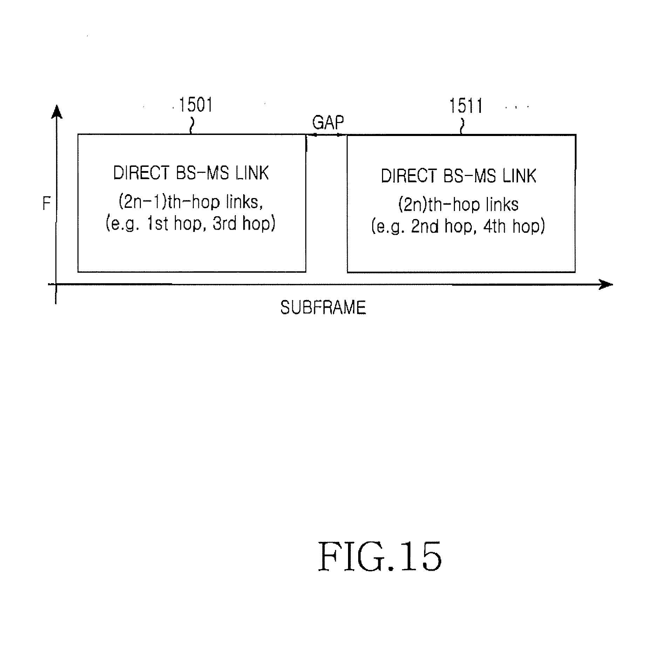

The multi-hop relay cellular network configures subframes for an odd-numbered hop link group and an even-numbered hop link group as illustrated in FIG. 6. If a direct link between a BS and an MS is established irrespective of the multi-hop relay link established via the RSs, both the direct link and the multi-hop relay link are provided between the BS and the MS as illustrated in FIG. 15. The multi-hop relay link includes the odd-numbered and even-numbered hop link groups.

FIG. 15 illustrates a subframe structure simultaneously supporting a BS-MS link with grouped hop links and a BS-MS link being a direct link according to the present invention.

Referring to FIG. 15, a subframe 1501 for an odd-numbered hop link group and a subframe 1511 for an even-numbered hop link group are configured for the multi-hop relay link established by the RSs. The subframes 1501 and 1511 include information about the direct BS-MS link. The subframes 1501 and 1511 and the direct BS-MS link are distinguished by different radio resources (e.g. time, frequency).

Aside from configuring the subframes separately for the odd-numbered and even-numbered hop link groups, it can be further contemplated that a frame is configured for each hop link group.

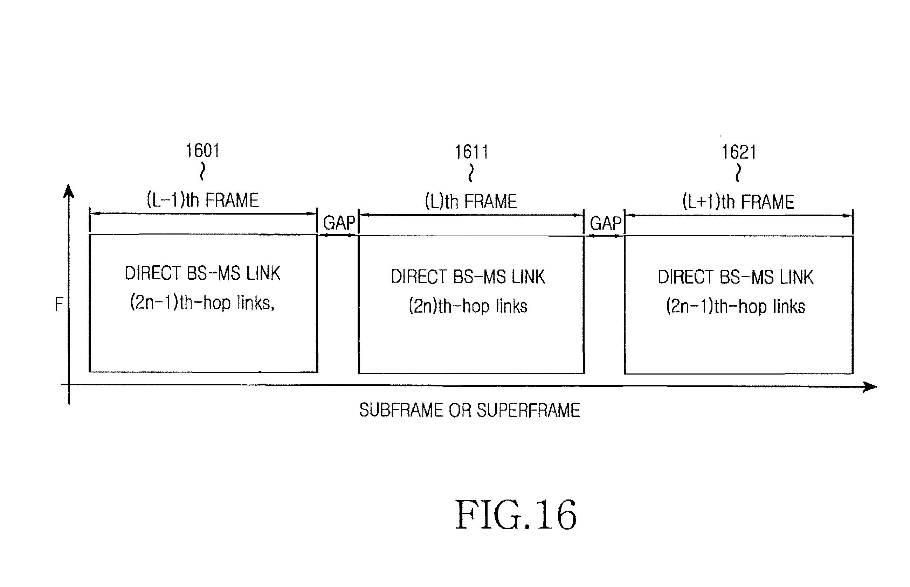

FIG. 16 illustrates a superframe structure in which a hop link group is provided on a frame basis according to the present invention.

Referring to FIG. 16, an (L-1)^{th} frame 1601 includes an odd-numbered hop link group (a (2n-1)^{th}-hop link group) and the direct BS-MS link, and an L^{th} frame 1611 includes an even-numbered hop link group (a 2n^{th}-hop link group) and the direct BS-MS link. An (L+1)^{th} frame 1621 includes an odd-numbered hop link group (a (2n-1)^{th}-hop link group) and the direct BS-MS link.

In this way, the multi-hop relay cellular network expands to the superframe structure so as to carry out transmission from each hop group in one frame. One frame is composed of a downlink subframe and an uplink subframe which are consecutive in time. Considered independently of the multi-hop relay link, the direct BS-MS link is included in each frame. Yet, considered to be a one-hop link, the direct BS-MS link is included in the odd-numbered hop link group.

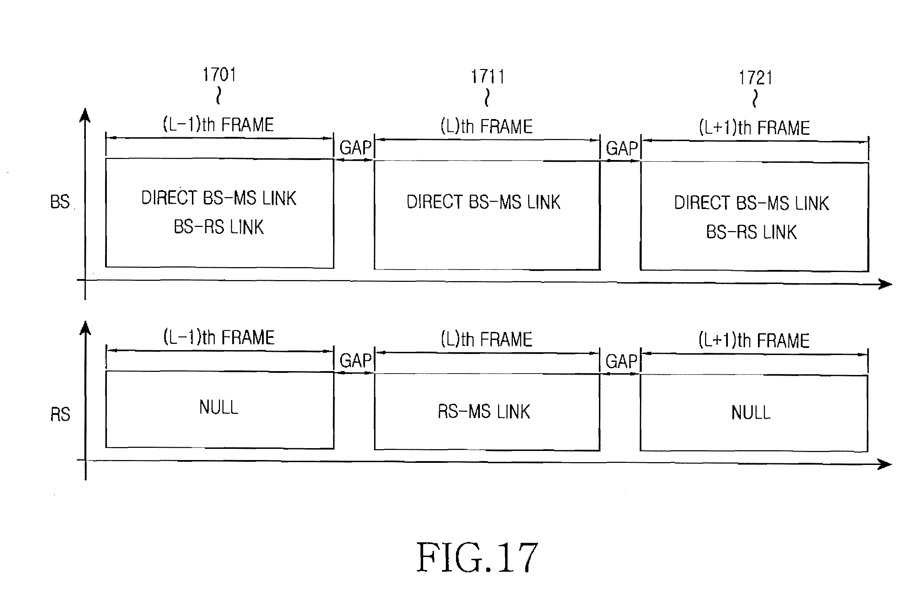

In the case of using a superframe as illustrated in FIG. 16, a BS and an RS provides communication links illustrated in FIG. 17.

FIG. 17 illustrates a superframe structure for communication links that a BS and an RS provide in a two-hop BWA system according to the present invention.

Referring to FIG. 17, the BS provides a direct link to an MS in each frame. Specifically, an (L-1)^{th} frame 1701 provides the direct BS-MS link and a BS-RS link and an L^{th} frame 1711 provides the direct BS-MS link. An (L+1)^{th} frame 1721 is similar to (L-1 )^{th} frame 1701.

On the other hand, the BS-RS link and an RS-MS link are separately provided so that the RS transmits and receives in Time Division Multiplexing (TDM).

For example, on the downlink, the RS receives data on the BS-RS link in the (L-1)^{th} frame 1701 and sends data to the MS on the RS-MS link in the L^{th} frame 1711. When time division is considered on a frame basis, each communication link (e.g. the BS-RS link and the RS-MS link) includes the downlink and the uplink.

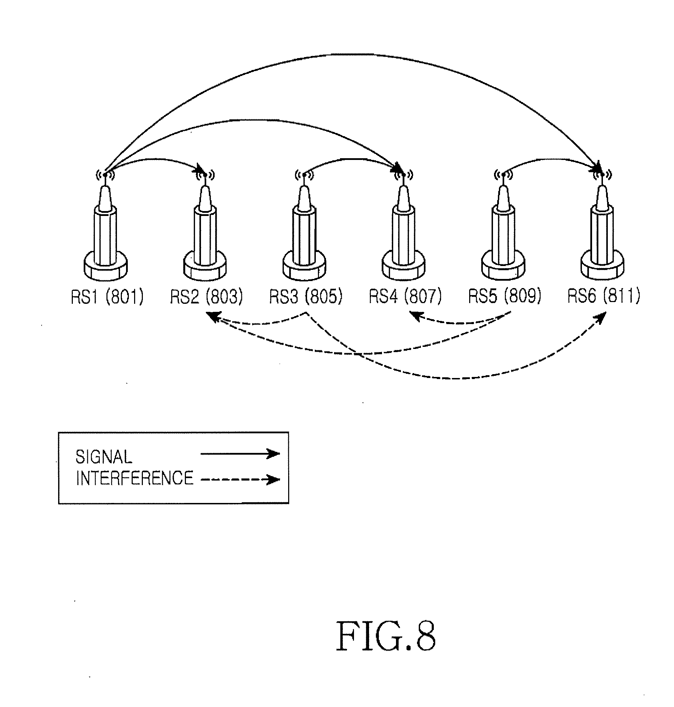

However, if signal transmission and reception are performed in subframes or super frames as illustrated in FIGs. 6 and 15, interference occurs as illustrated in FIGs. 7 and 8. The following description is made on the assumption of a two-hop link in FIG. 7 and a 5-hop link in FIG. 8.

FIG. 7 illustrates signal flows and interference paths in the multi-hop relay cellular network according to the present invention.

Referring to FIG. 7, when a signal is sent from an (M-1)^{th} hop 701 to an M^{th} hop 703, the signal transmission from an (M+1)^{th} hop 705 interferes with a receiver at the M^{th} hop 703 in a first period. Then when data is sent from the M^{th} hop 703 to the (M+1)^{th} hop 705, the signal transmission from the M^{th} hop 703 interferes with the (M-1)^{th} hop 701.

FIG. 8 illustrates signal flows and interference paths in the multi-hop relay cellular network according to the present invention.

Referring to FIG. 8, when signals are sent from RSs 801, 805 and 809 (RS1, RS3, and RS5) of an odd-numbered hop link group to RSs 803, 807 and 811 (RS2, RS4, and RS6) of an even-numbered hop link group on the same channel, they cause interference to RSs at hops other than destination hops. For example, if RS3 sends a signal to RS4, the signal interferes with RS2 and RS6.

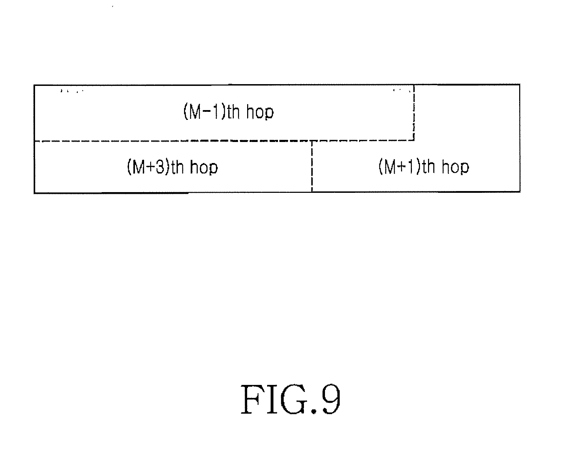

As described above, when signals are sent and received on a hop link group basis, interference is produced by signals in the same hop link group. To reduce the interference, the subframe of the hop link group is configured as illustrated in FIG. 9.

FIG. 9 illustrates resource allocation to a subframe for a group of multiple hops in a multi-hop relay scheme according to the present invention.

Referring to FIG. 9, subframes for each hop link in a hop link group are divided into OFDM bursts and different orthogonal resources are allocated to the subframes in a subframe for the hop link group.

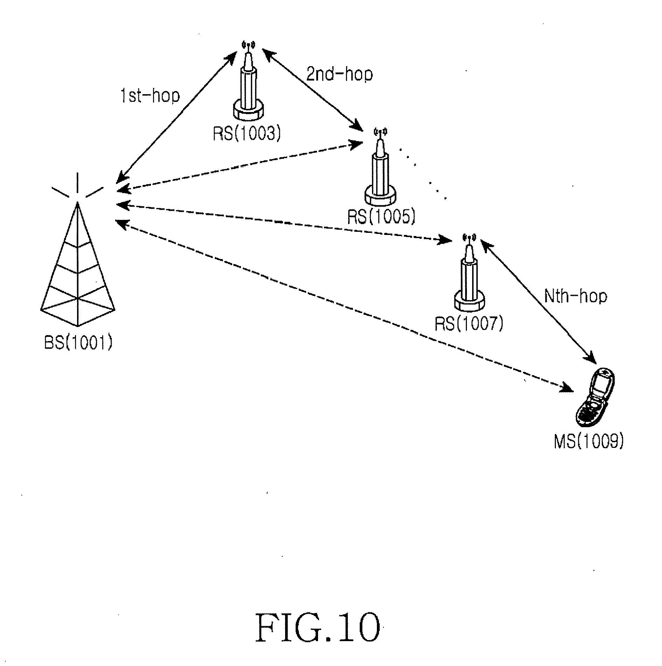

For an RS separated from a BS by multiple hops, a direct communication link may be required between the RS and the MS as illustrated in FIG. 10.

FIG. 10 illustrates a multi-hop link structure in the multi-hop relay cellular network scheme according to the present invention.

Referring to FIG. 10, RSs 1005 and 1007 or an MS 1009 separated from a BS 1001 by multiple hops may establish direct links as well as relay links with the BS 1001.

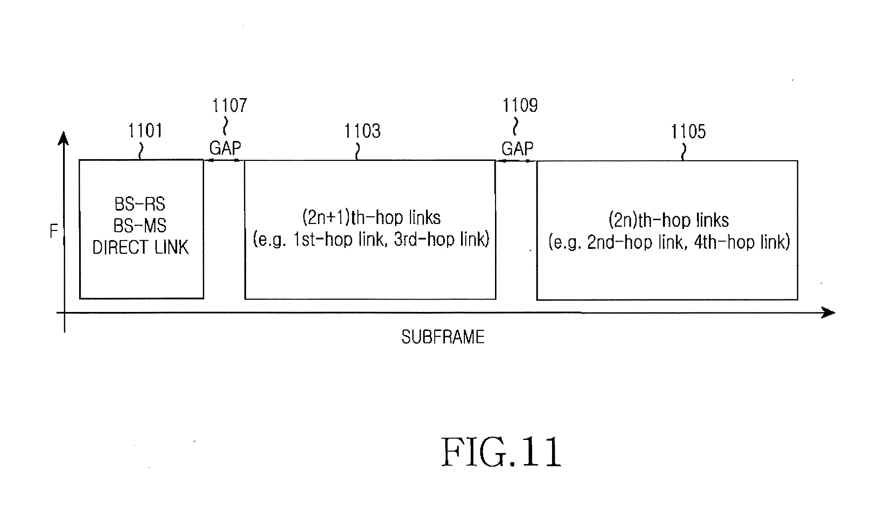

To distinguish the direct links from the relay links, a frame is configured as illustrated in FIG. 11.

FIG. 11 illustrates a subframe structure supporting groups of multiple hops according to the present invention. Subframes for a direct link and a relay link are configured in one frame. The horizontal axis represents time and the vertical axis represents frequency.

Referring to FIG. 11, one frame is composed of a direct link subframe 1101, a subframe 1103 for an odd-numbered hop link group, and a subframe 1105 for an even-numbered hop link group.

The frame allocates different time slots to the subframes 1101, 1103 and 1105 to distinguish the direct link from the relay link. For the relay link, multiple hops are grouped into the odd-numbered hop link group and the even-numbered hop link group (i.e. a two-hop earlier group and a two-hop later group) and the different subframes are configured for the hop link groups. Thus, signal transmission on the direct link and the relay link is performed in time division, not simultaneously. The subframe 1105 may be exchanged with the subframe 1103 in time slot position.

A transition gap 1107 intervenes between the subframes 1101 and 1103 and a transition gap 1109 intervenes between the subframes 1103 and 1105.

In the illustrated case of FIG. 11, the multi-hop relay cellular network divides one frame into time slots and configures subframes for hop link groups and a subframe for a direct link using the time slots. Herein, it can be further contemplated that a superframe is configured in which the hop link group subframes and the direct link subframe occupy one or more frames.

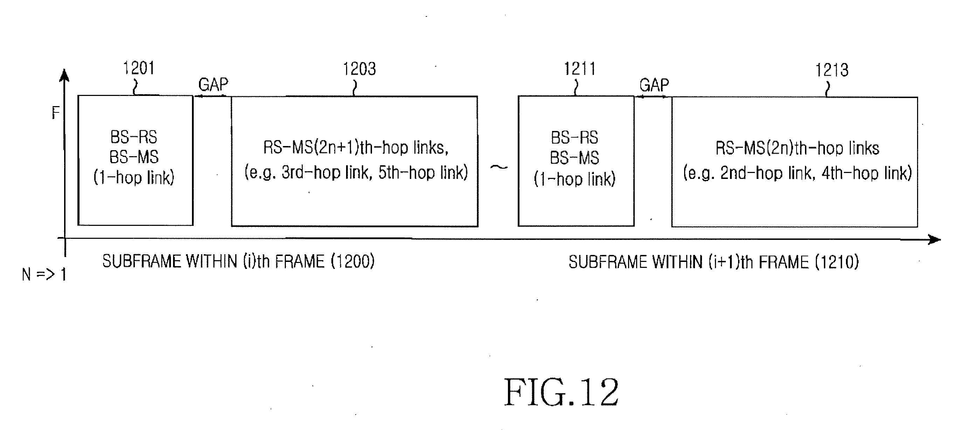

FIG. 12 illustrates a subframe structure supporting groups of multiple hops according to the present invention. In the illustrated case of FIG. 12, the subframes for the direct link and the relay link occupy two frames.

Referring to FIG. 12, an i^{th} frame 1200 is composed of a direct link subframe 1201 and a subframe 1203 for an odd-numbered hop link group, and an (i+1)^{th} frame 1210 is composed of a direct link subframe 1211 and a subframe 1213 for an even-numbered hop link group.

A direct BS-MS link may be established independently of the multi-hop link established using RSs. The direct BS-MS link subframe may be included in either or both of the subframes 1203 and 1213. Alternatively, the direct BS-MS link can be configured in a frame other than the two frames 1200 and 1210.

In this subframe structure, a single transition gap is required in one subframe. The resulting decrease of the transition gap-associated overhead increases system capacity. In addition, since one subframe is divided into two time slots, data granularity decreases, compared to division of one subframe into more time slots. Thus spectrum efficiency is high. As a time slot occupied with the same amount of resources is lengthened, the frequency band that can be occupied is reduced. As a result, link budget is improved due to power concentration.

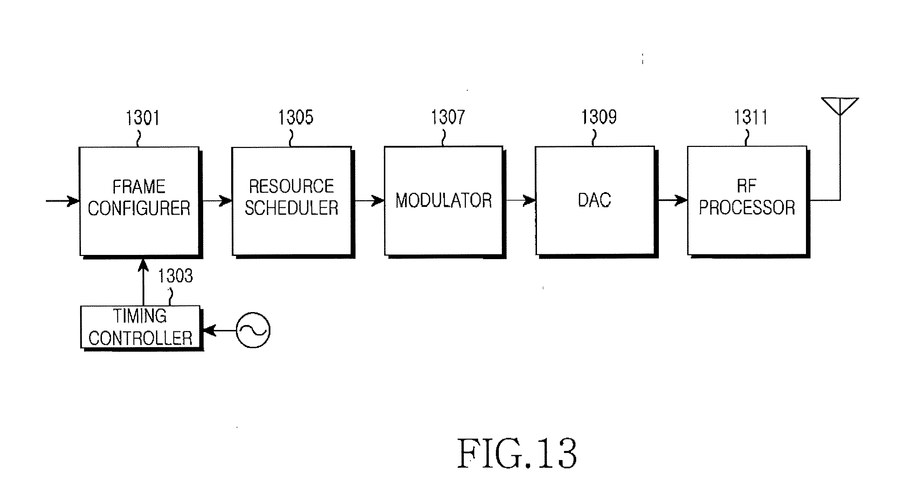

Now a description will be made of the structures of a BS apparatus and an RS apparatus for grouping multiple hops and configuring a frame for the hop link groups. Since the BS apparatus and the RS apparatus are identical in configuration, the BS apparatus will be described with reference to FIG. 13, by way of example.

FIG. 13 is a block diagram of the BS (RS) apparatus for grouping multiple hops for signal transmission according to the present invention.

Referring to FIG. 13, the BS includes a frame configurer 1301, a timing controller 1303, a resource scheduler 1305, a modulator 1307, a Digital-to-Analog Converter (DAC) 1309, and a Radio Frequency (RF) processor 1311.

The frame configurer 1301 generates a subframe with data received from an upper layer. For example, if a signal from the BS is sent on a direct link, the frame configurer 1301 configures a direct link subframe or frame as illustrated in FIGS. 11, 12, 15 or 16. On the other hand, if the signal is sent on a one-hop link, the frame configurer 1301 configures a subframe or frame for an odd-numbered hop link group as illustrated in FIG. 6 or FIG. 15.

The frame configurer 1301 sends the subframe configured in accordance with a timing signal received form the timing controller 1303 to the RS or the MS.

The resource scheduler 1305 allocates subframes received from the frame configurer 1301 to bursts for the links of the subframes.

The modulator 1307 modulates the subframes allocated to the link bursts in a predetermined modulation scheme. The DAC 1309 converts the digital signal received from the modulator 1307 to an analog signal.

The RF processor 1311 upconverts the analog signal to an RF signal and transmits it through an antenna.

As to the RS apparatus, the frame configurer 1301 generates a subframe for a hop link group corresponding to the hop of the RS.

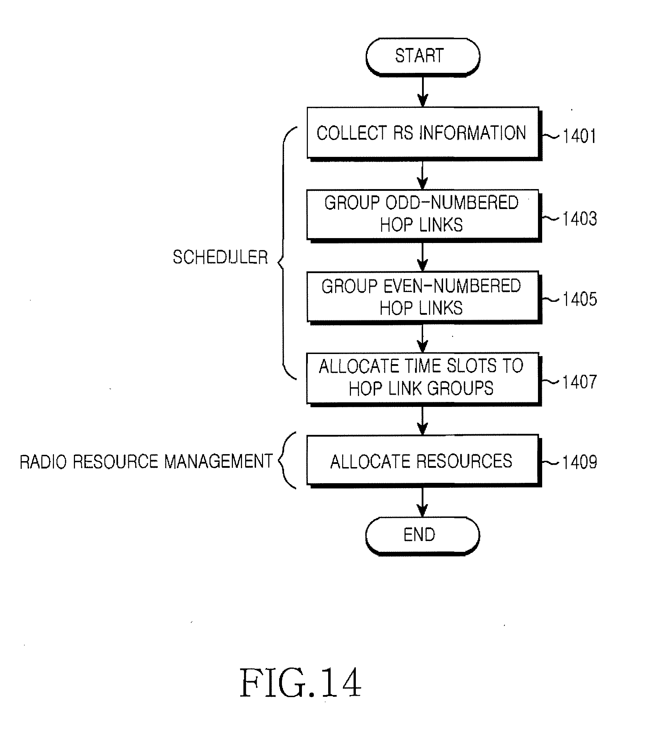

As described above, in order to configure subframes for an even-numbered hop link group and an odd-numbered hop link group separately, the BS sends resource allocation information required for data transmission from each RS to the RS by searching for a route to a destination in the procedure illustrated in FIG. 14.

FIG. 14 is a flowchart illustrating a BS operation for grouping multiple hops in the multi-hop relay cellular network according to the present invention.

Referring to FIG. 14, the BS collects information about RSs in order to establish a relay link to a destination (an MS) in the cellular network in step 1401.

In steps 1403 and 1405, the BS groups multiple hops into an odd-numbered hop group and an even-numbered hop group, respectively, based on the collected information.

The BS allocates time slots to the two hop groups in a subframe through the scheduler in step 1407.

In step 1409, the BS allocates burst-type resources to the RSs of the two hop groups according to the time slots allocated to the two hop groups. Information about the time slots allocated to each hop group is common control information. The common control information is sent from the BS and can be relayed via the RSs.

Then the BS ends the procedure.

While it has been described above that a frame or super-frame is so configured as to include subframes for an odd-numbered hop link group and an even-numbered hop link group, it can be further contemplated that the BS further configures a subframe for a direct link in addition to the subframes for the odd-numbered hop link group and the even-numbered hop link group.

In accordance with the present invention as described above, multiple hops are grouped and subframes are configured for the hop groups in a multi-hop relay cellular network. The resulting expansion of the coverage area of a BS and the resulting reduction of transition gap-overhead lead to an increase of system capacity and efficiency.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method of configuring a subframe in a multi-hop relay cellular network, comprising the steps of:
configuring a subframe for an n^{th}-hop link group in a first period of the subframe; and
configuring a subframe for an (n+1)^{th}-hop link group in a second period of the subframe.

2. The method of claim 1, wherein the first and second periods are distinguished by time resources.

3. The method of claim 1, wherein the first period and/or the second period further includes a subframe for a direct link between a Base Station (BS) and a Mobile Station (MS).

4. The method of claim 1, wherein subframes for one-hop links included in each of the subframe for the n^{th}-hop link group and the subframe for the (n+1)^{th}-hop link group are distinguished by orthogonal resources.

5. The method of claim 4, wherein the orthogonal resources are one of time, frequency, space, and code.

6. A method of configuring a subframe in a multi-hop relay cellular network, comprising the steps of:
configuring a subframe for a direct link of a Base Station (BS) in a first period of the subframe;
configuring a subframe for an n^{th}-hop link group in a second period of the subframe; and
configuring a subframe for an (n+1)^{th}-hop link group in a third period of the subframe.

7. The method of claim 6, wherein the direct link subframe includes a subframe for a link between the BS and a Mobile Station (MS) and a link between the BS and a Relay Station (RS).

8. The method of claim 6, wherein the first, second and third periods are distinguished by time resources.

9. The method of claim 6, wherein the second period and/or the third period further includes a subframe for the direct link between the BS and the MS.

10. The method of claim 6, wherein subframes for one-hop links included in each of the subframe for the n^{th}-hop link group and the subframe for the (n+1)^{th}-hop link group are distinguished by orthogonal resources.

11. The method of claim 10, wherein the orthogonal resources are one of time, frequency, space, and code.

12. A method of configuring a superframe in a multi-hop relay cellular network, comprising the steps of:
configuring a subframe for an n^{th}-hop link group in an 1^{Ih} frame; and
configuring a subframe for an (n+1)^{th}-hop link group in an (i+1)^{th} frame.

13. The method of claim 12, wherein the 1^{th} frame and/or the (i+1)^{th} frame further includes a subframe for a direct link of a Base Station (BS).

14. The method of claim 13, wherein the direct link subframe includes a subframe for a link between the BS and a Mobile Station (MS) and a link between the BS and a Relay Station (RS).

15. The method of claim 13, wherein the step of configuring a subframe for an n^{th}-hop link group in an i^{th} frame comprises:
configuring the subframe for the direct link of the BS in a first period of the i^{th} frame; and
configuring the subframe for the n^{th}-hop link group in a second period of the i^{th} frame.

16. The method of claim 15, wherein the second period of the i^{th} frame further includes the subframe for the direct link between the BS and the MS.

17. The method of claim 15, wherein the first and second periods are distinguished by time resources.

18. The method of claim 13, wherein the step of configuring a subframe for an (n+1)^{th}-hop link group in an (i+1)^{th} frame comprises:
configuring the subframe for the direct link of the BS in a first period of the (i+1)^{th} frame; and
configuring the subframe for the (n+1)^{th}-hop link group in a second period of the (i+1)^{th} frame.

19. The method of claim 18, wherein the second period of the (i+1)^{th} frame further includes the subframe for the direct link between the BS and the MS.

20. The method of claim 18, wherein the first and second periods are distinguished by time resources.

21. The method of claim 12, wherein subframes for one-hop links included in each of the subframe for the n^{th}-hop link group and the subframe for the (n+1)^{th}-hop link group are distinguished by orthogonal resources.

22. The method of claim 21, wherein the orthogonal resources are one of time, frequency, space, and code.

23. A method of configuring a superframe in a multi-hop relay cellular network, comprising the steps of:
configuring a subframe for a direct link of a Base Station (BS) in an i^{th} frame;
configuring a subframe for an n^{th}-hop link group in an (i+1)^{th} frame; and
configuring a subframe for an (n+1)^{th}-hop link group in an (i+2)^{th} frame.

24. The method of claim 23, wherein the direct link subframe includes a subframe for a link between the BS and a Mobile Station (MS) and a link between the BS and a Relay Station (RS).

25. The method of claim 23, wherein the (i+1)^{th} frame and/or the (i+2)^{th} frame further includes a subframe for a direct link between the BS and the MS.

26. The method of claim 23, wherein subframes for one-hop links included in each of the subframe for the n^{th}-hop link group and the subframe for the (n+1)^{th}-hop link group are distinguished by orthogonal resources.

27. The method of claim 26, wherein the orthogonal resources are one of time, frequency, space, and code.

28. A method of supporting multiple links by grouping multiple hops in a Base Station (BS) in a multi-hop relay cellular network, comprising the steps of:
collecting information about Relay Stations (RSs) forming relay links to a destination;
grouping the relay links according to the collected RS information;
allocating different resources to the relay link groups; and
sending information about the allocated resources to the RSs.

29. The method of claim 28, wherein the collected RS information includes information about the number of hops to the RSs.

30. The method of claim 28, wherein the grouping step comprises grouping the relay links into an even-numbered hop group and an odd-numbered hop group.

31. The method of claim 28, wherein the allocation step comprises allocating different time resources to the relay link groups.

32. A frame configuring apparatus in a multi-hop relay cellular network, comprising:
a timing controller for providing a timing signal for transmission of each subframe according to a frame configuration method;
a frame generator for generating subframes for predetermined hop link groups according to the timing signal and constructing a frame with the subframe; and
a resource scheduler for mapping the subframes to resources allocated to a burst for the hop link groups.

33. The frame configuring apparatus of claim 32, wherein the frame generator generates a subframe for an n^{th}-hop link group in a first period of the subframe, and generates a subframe for an (n+1)^{th}-hop link group in a second period of the subframe, according to the timing signal.

34. The frame configuring apparatus of claim 32, wherein the frame generator generates a subframe for a direct link of the BS in a first period of the subframe, generates a subframe for an n^{th}-hop link group in a second period of the subframe, and generates a subframe for an (n+1)^{th}-hop link group in a third period of the subframe, according to the timing signal.

35. The frame configuring apparatus of claim 32, wherein the frame generator generates the subframe for the n^{th}-hop link group in an i^{th} frame, and generates the subframe for the (n+1)^{th}-hop link group in an (i+1)^{th} frame, according to the timing signal.

36. The frame configuring apparatus of claim 32, wherein the frame generator generates the subframe for the direct link of the BS in an i^{th} frame, generates the subframe for the n^{th}-hop link group in an (i+1)^{th} frame, and generates the subframe for the (n+1)^{th}-hop link group in an (i+2)^{th} frame.
